# EUROPEAN PATENT SPECIFICATION

(11) **EP 2 708 350 B1**
(45) Date of publication and mention of the grant of the patent: **11.01.2017**
(21) Application number: 13184053.0
(22) Date of filing: 12.09.2013
(51) Int. Cl.: B29D 30/00, B29D 30/06

(54) **Green tire preformer apparatus and method for preforming a green tire**
Reifenrohlings-Vorformungsvorrichtung und Verfahren zum Vorformen eines Reifenrohlings
Appareil de préformage de pneus crus et procédé de préformage d'un pneu cru

(30) Priority: 13.09.2012 US 201261700488 P; 13.09.2012 US 201261700495 P; 21.02.2013 US 201313773035; 26.02.2013 US 201313776903
(43) Date of publication of application: 19.03.2014
(73) Proprietor: The Goodyear Tire & Rubber Company, Akron, Ohio 44316 (US)
(72) Inventor: Delgado, Andres Ignacio, Medina, OH Ohio 44256 (US); Bator, Eugene Andrew, Diamond, 44412 (US)
(74) Representative: Kutsch, Bernd

(56) References cited:
- US-A- 2 812 546
- US-A- 3 153 263
- US-A- 3 948 591
- US-A- 4 236 883
- US-A- 4 545 750
- US-A- 4 865 532
- US-A- 4 874 303

## Description

### Field of the Invention

The present invention is directed to tires and tire machinery. More particularly, the present invention is directed to a machine and method that reduces non-uniformities of a green tire.

### Background of the Invention

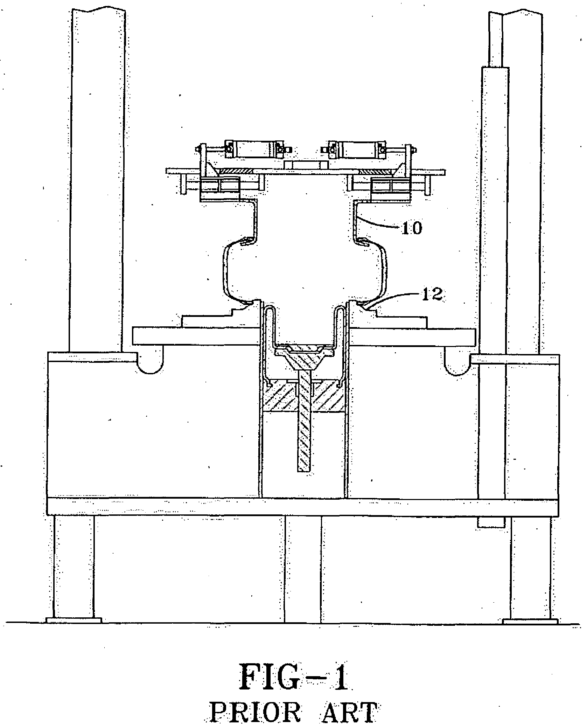

Tire uniformity is important to overall performance. Non-uniformities may occur during the tire building process, green tire storage, or during loading and shaping of the green tire into the tire press prior to curing. One aspect of tire non-uniformity is when the opposed tire beads are not concentric and parallel to each other. As shown in Fig. 1, a prior art green tire loader grasps the tire from the top bead and positions the lower bead onto a bottom mold bead ring in the press. Next, the top bead is released without control of its location relative to the bottom bead, or the top mold bead ring. One problem with the prior art loader is that the lower sidewall bead region has not been rotated into cured position prior to engagement with the tapered bottom bead ring, and the loader is incapable of improving this undesirable condition. A second problem is that the green tire may or may not be centered on the loader or the bottom bead ring in the mold. A third problem is that the prior art tire loader has no means to accurately hold the top bead of the green tire concentric or parallel to the bottom bead.

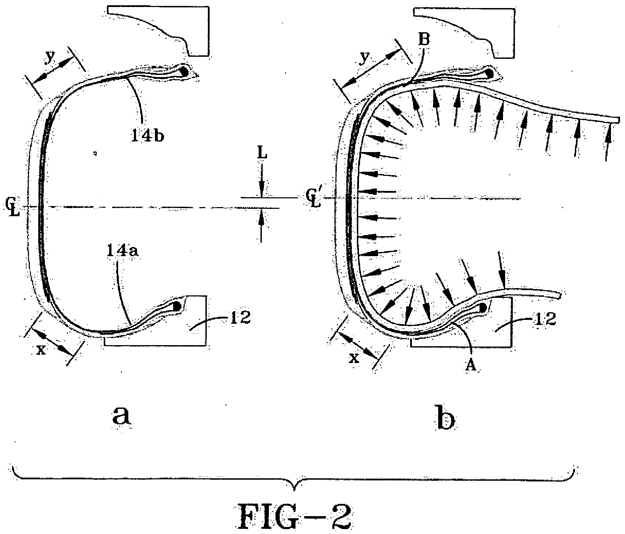

Fig. 2a illustrates a green tire having a bead seated on the bottom mold bead ring 12 prior to shaping and with the mold in the open position. At this point, dimension X is equal to dimension Y. As shown, the lower sidewall bead region 14a is constrained by the bottom mold bead ring 12, while the top sidewall bead region 14b is unconstrained. Fig 2b illustrates the green tire during shaping of the curing bladder. Fig 2b also illustrates that the lower ply endings A near the bottom mold bead ring are trapped between the bladder and the tapered bottom mold bead ring, thus severely restricting the lower sidewall area from rotating into the proper position. During bladder shaping the mold is not closed allowing the upper bead area to be unrestrained. As the shaping pressure increases, the upper ply endings B are pulled back around the bead resulting in an increase in the Y dimension. The increase in the Y dimension also causes the centerline of the tire to shift laterally from the desired centerline a distance L, further causing conicity. Thus as shown in Fig 2b, dimension Y is greater than X resulting in tire non-uniformity. When the press closes, the top mold bead ring engages the top bead, and forces the material in the top bead area to rotate around the top bead. The non-uniformity of material rotation around the top bead is similar to that of the bottom bead. Closing of the curing press does not solve the issues described above, and a tire with non-uniformity issues may still be cured.

It is thus desired to provide an improved apparatus for preforming the green tire prior to entry into the mold to ensure that the tire beads are concentric and parallel to each other: It is further desired to provide an improved apparatus that ensures the top and bottom bead areas are rotated into the proper cured position prior to placement into the tire mold and when loaded into the mold.

US-A-4,874,303 describes a tire vulcanizing press comprising means for holding the beads of the tire in a concentric and parallel position, moving the tire beads towards the other, rotating the tire beads into a predetermined position and holding the tire beads in that predetermined position. Similar tire vulcanizing presses are also described in US-A-4,236,883 and US-A-4,865,532.

US-A-2,812,546 describes an apparatus for curing pneumatic tires having a first bead support ring to support a first bead area of a green tire, a second bead support ring for holding a second tire bead area of a green tire, and first and second rotatable bead clamps wherein these bead clamps are positioned to clamp the first and second bead areas into engagement with the first and second bead support rings, respectively. Similar devices are described in US-A-3,153,263, US-A-3,948,591 and US-A-4,545,750.

### Summary of the Invention

The invention relates to a method in accordance with claim 1, to a green tire preformer in accordance with claim 4 and to a system in accordance with claim 11.

Dependent claims refer to preferred embodiments of the invention.

The invention provides in a first preferred aspect a green tire preformer apparatus for rotating the bead areas of the tire into alignment with respect to each other, the green tire preformer apparatus includes a first support having a first bead ring to support a first tire bead area of a green tire, the green tire having opposing first and second tire bead areas, and a second support having a second bead ring positionable for engagement with the second tire bead area; and first and second rotatable bead clamps, wherein the first and second rotatable bead clamps are positioned to clamp the first and second bead areas into engagement with the first and second bead rings, respectively. The invention provides in a second aspect, a tire loader that has had a bead support ring and paddles to grip the outer crown portion of the tire.

The invention provides in a further preferred aspect a method for preforming a green tire to a predetermined position prior to insertion into a tire mold. The green tire has opposing first and second bead areas. The method includes the steps: holding a first and second bead of the green tire in a concentric and parallel position, moving one of the first and second beads towards the other, rotating the first and second bead areas into a predetermined position, and then holding the first and second beads and bead areas in the predetermined position for a set period of time indexing the green tire and repeating the rotation several times.

The invention provides in yet a further preferred aspect a method for aligning the bead areas of green tire into alignment with each other. The method includes the steps: providing a first bead support ring and mounting the lower bead of the green tire onto said first bead support ring, providing a second bead support ring and moving the second bead support ring into engagement with the upper bead of the tire until the tire is in a desired pre-mold position, and rotating the first and second bead areas of the tire into the desired pre-mold shape.

### Brief Description of the Drawings

The invention will be described by way of example and with reference to the accompanying drawings in which:
Fig. 1 illustrates a prior art loader loading a green tire into a tire press.
Fig. 2a is a cross sectional view of a green tire partially mounted on the bottom mold bead ring prior to engagement of the shaping bladder and mold closing;
Fig. 2b is a cross sectional view of a green tire partially mounted and shaped on the bottom bead ring of the tire mold during bladder shaping;
Fig. 3 is a cross sectional front view of a green tire pre-former of the present invention shown in the start position without a green tire;
Fig. 4 is a cross sectional front view of a green tire pre-former of the present invention shown in the start position with a green tire and green tire loader;
Fig. 5 and 5a are cross sectional views of the bottom mold bead ring support with translating support ring;
Fig. 6 is a cross sectional front view of a green tire pre-former of the present invention shown in the loaded and lowered position with a green tire and green tire loader;
Fig. 7 is a cross sectional front view of a green tire pre-former of the present invention shown with the loader upper mold bead support ring engaging the top bead of the green tire prior to the material rotation around the beads;
Fig. 8 is a cross sectional front view of a green tire pre-former of the present invention shown in the actuated/clamped position, after rotating the bead area material around both the top and bottom beads but prior to the loader grasping the outside diameter of the green tire;
Fig. 9 is a cross sectional front view of a green tire pre-former of the present invention shown with both bead areas rotated and the green tire grasped in the loader for transport;
Fig. 10a illustrates the green tire prior to shaping or lower bead area rotation;
Fig. 10b illustrates the green tire after upper and lower bead area rotation, but prior to shaping.

### Detailed Description of the Invention

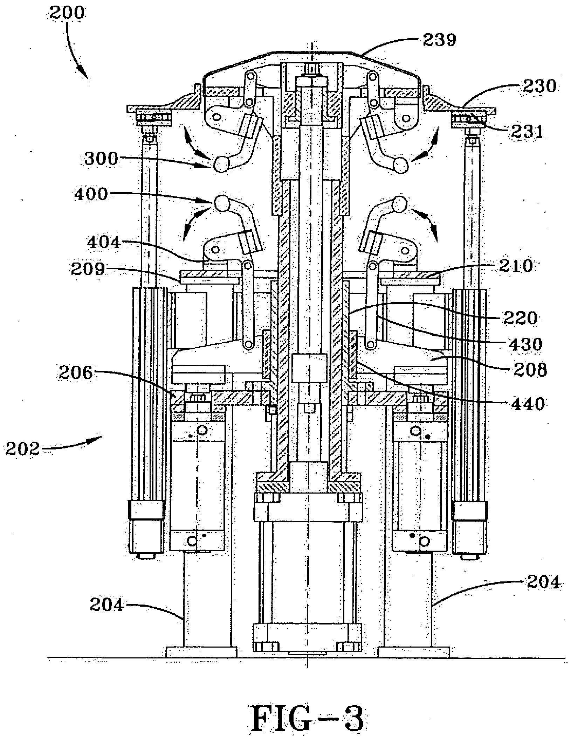

Fig. 3 illustrates a green tire pre-former apparatus 200 of the present invention. The green tire pre-former apparatus 200 is useful for pre-forming a green tire so that the overall tire shape matches the cured tire shape, and the tire beads are concentric and parallel with respect to each other prior to entry into the mold. The tire pre-former apparatus 200 comprises a support frame 202 that has three or more support legs 204 joined together by a stationary lower support plate 206. An annular center support outer column 220 extends vertically upwards from the support plate 206 guiding a center support inner column. A lower spider ring 208 is slidably mounted on center support outer column 220. Support frame 202 further comprises a stationary upper support plate 210 that is connected to the lower support plate via a plurality of support frame columns 209.

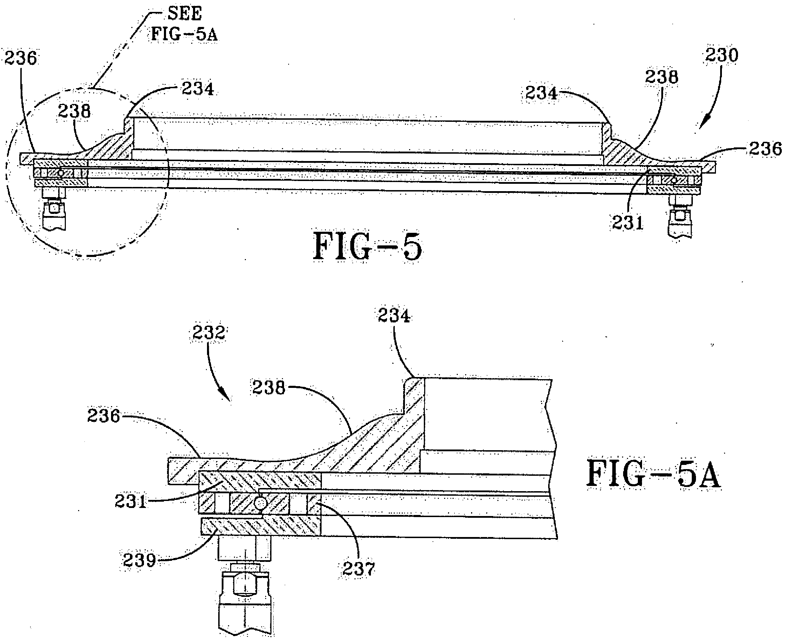

The green tire pre-former apparatus 200 further comprises a lower bead support ring 230. The lower bead support ring 230 is shown in Fig. 3 in a raised position suitable for loading the green tire onto the pre-former apparatus. As best shown in Fig. 5a, the lower bead support ring 230 has a lower surface mounted to an upper ring 231. The upper ring may be optionally connected to a rotatable bearing 237 so that the upper ring is free to rotate. The rotatable bearing 237 is connected to a bearing support plate 239. The lower surface of the bearing support plate 239 is mounted to a distal end 232 of a translating rod. Thus the lower bead support ring may be raised and lowered via translating rods, and may also be rotated radially around the center column via rotatable bearing ring 237. A gear rack is positioned for engagement with the rotatable bearing ring 237 in order to precisely position the lower bead support ring 230. A programmable rotation-positioning device may optionally be used to position the rotatable bearing ring 237.

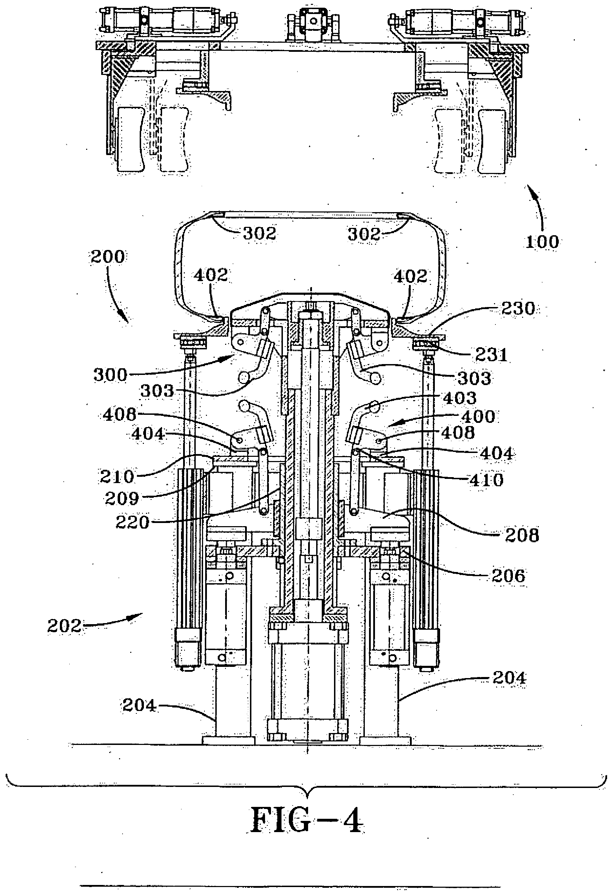

The lower bead support ring 230 as shown in Fig. 5A has a bead support extending radially outward from the support ring 230. The bead support has an annular lip 234 located axially inward of the bead support. The annular lip is straight and has no taper. The bead support has a flat portion 236 located axially outward on the support ring. The bead support 232 further comprises an angled seat 238 that joins the annual lip 234 to the flat portion 236. The angled seat 238 helps cam over the bead area material into the proper cured alignment position. The green tire pre-former apparatus 200 further comprises a top hat which facilitates the proper centering of the green tire bead and tire onto the lower bead support ring of the green tire pre-former apparatus. Fig. 4 illustrates a green tire loaded onto the green tire pre-former apparatus with support ring 231 in the raised position with the lower sidewall bead area of the green tire in mating engagement with the lower bead support ring 230.

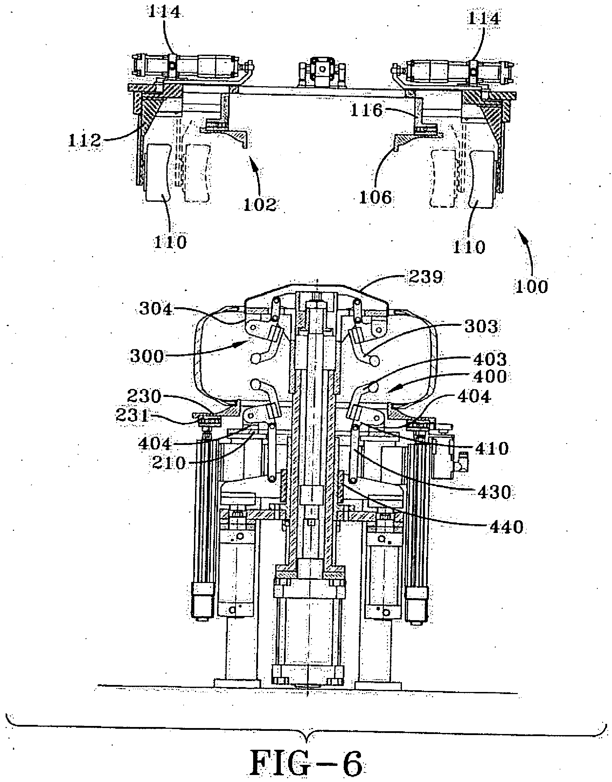

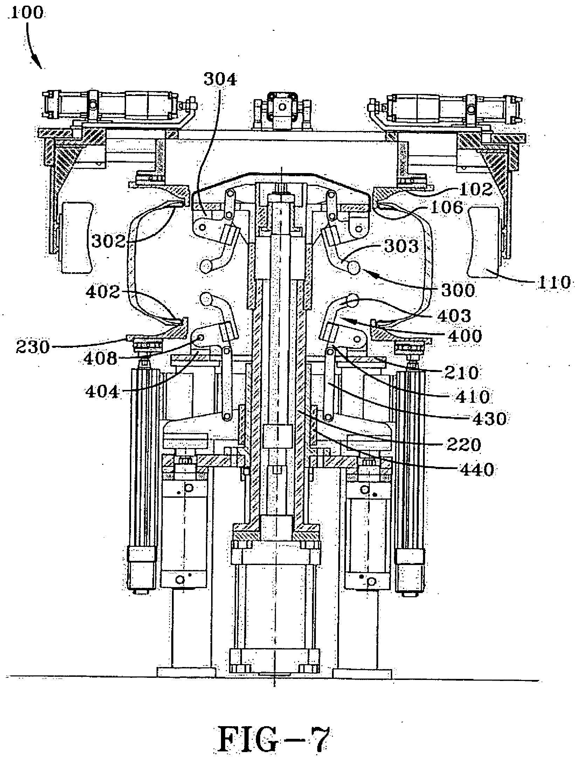

After the green tire has been lowered on the green tire pre-former apparatus 200 as shown in Fig. 6, the green tire loader 100 is lowered into the support/grasp position around the green tire as shown in Fig. 7. The green tire loader 100 includes an upper support ring 102 for engaging and supporting the upper bead of the green tire. The upper support ring 102 may optionally be rotatable, as described in more detail, below. The loader 100 with a rotatably mounted upper support ring 102 is lowered until the inner radial lip 106 of the upper bead support ring 102 engages the top bead of the green tire. The green tire loader further includes a plurality of tire engaging paddles or chucks 110. Each tire chuck is independently radially movable on a rail support 112 connected to a pneumatically driven piston 114. Each chuck is lockable at its own unique tread radius position thus holding and maintaining the concentricity of the top tire bead to the top bead lip ring 102. Fig. 6 shows the upper bead support ring 102 mounted on a support structure 116 in order to stabilize the support ring, facilitate bead size, provide for ring size changes, and position the support ring 102 adjacent to the tire engaging chucks 110.

As shown in Fig. 7, the green tire pre-former device further comprises upper and lower bead clamps, 300 and 400, which rotate and engage the inner tire bead area 302 and 402, thus causing the green tire bead area components 302 and 402 to rotate around the upper and lower bead support rings 230, 102 (including their angled seats 238, and their straight, non-tapered annular lips 234, 106) until the inner tire bead areas 302, 402 are held securely against the flat areas 236. The bead area components are able to rotate around the bead ring because the support rings 102, 230 have no tapered lips which prevent the rotation. The bead area components 302, 402 are the tire components that are rotated around the bead ring, which include the rim strip, inner liner, apex, the ply, and typically the lower sidewall below the turnup. Depending on tire design, other components around the bead area will also be rotated.

A plurality of upper and lower bead clamps 300, 400 are arranged in an annular fashion and are positionable to engage the tire bead area components 302,402. The bead clamps 300, 400 include curved or L shaped fingers that are adjustable in length, and function to grip the tire bead area components 302, 402 into engagement with the support rings 102, 230. The bead clamps 300, 400 are pneumatically actuated in multiple partial steps, performed sequentially that ultimately result in the complete uniform rotation of the tire bead area components 302, 402 into engagement with the flat areas 236 of the bead support rings 102, 230. The bead clamps are pivotally mounted to support flanges 304 and 404. The lower bead clamps 400 are positioned in an annular arrangement adjacent to the lower bead ring 230. The lower bead clamps rotate about pin 408 of flange 404. Flanges 404 are mounted to the support plate 210 of the tire pre-former. The lower bead clamps include a bead clamp pivot 410 having an outer end rigidly connected to the bead finger 403 and an inner end pinned to the support flange 404, so that rotation of the bead clamp pivot 410 rotates the bead finger 403 about pin 408. Bead clamp pivot 410 has a distal end connected to arm 430. Arm 430 is pin connected to lower spider ring 208, which slides on center support outer column 220. Thus rotation of the lower bead area into the desired shape occurs during actuation of the arms 430 via sliding spider ring 208 pushed by a pneumatic actuator.

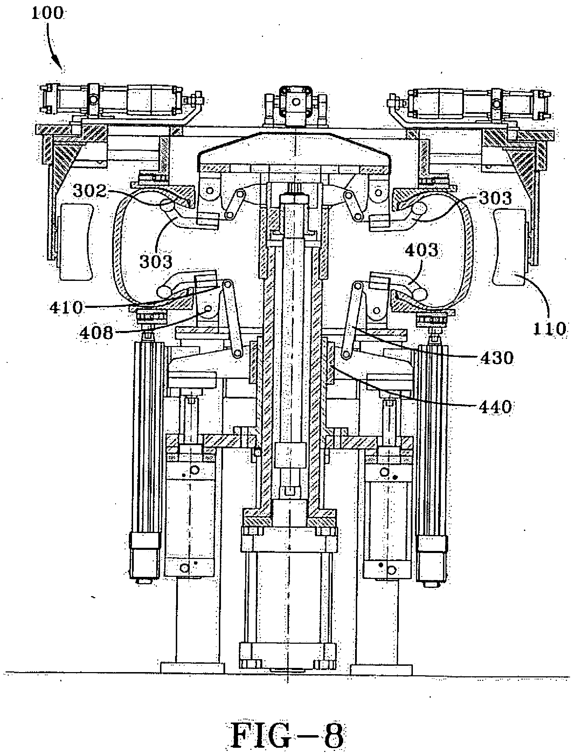

Fig. 8 illustrates the upper and lower bead clamps after being rotated into position so that the bead area components 302, 402 engage with the upper and lower bead rings 102, 230. This position is held for a period of time sufficient for the green tire to retain its shape, typically in the range of 2 to 10 minutes. The time may vary depending upon the particular tire size and components used. Next, the upper and lower bead clamps are unclamped, and the upper and lower bead support rings are rotationally indexed, and then the clamps are actuated. The above steps are repeated until the green tire has rotated a complete circle.

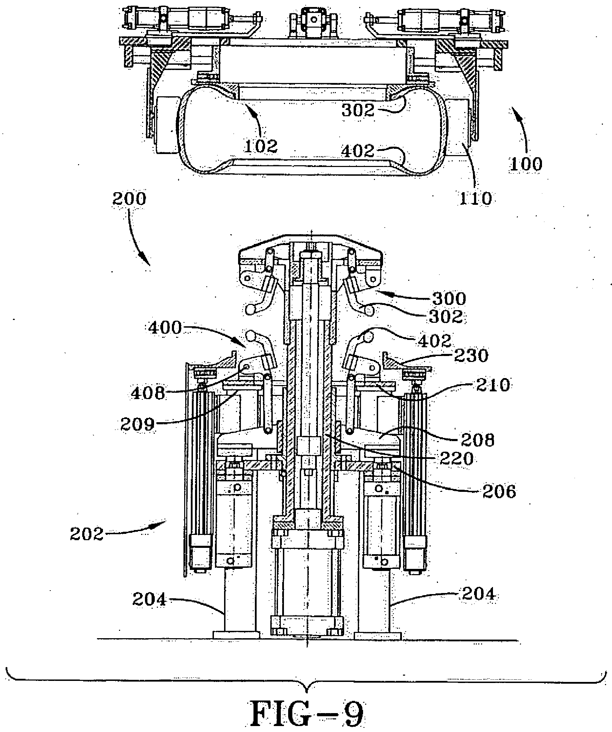

Fig. 9 illustrates the green tire loaded in the loader 100 after removal from the pre-former 200. The loader 100 grips the outer radial surface of the tread region of the green tire. The upper bead area of the green tire is still in engagement with the rotatable upper bead ring support 102 to ensure the bead area 302 remains concentric to the bead center and supported during entry of the curing bladder at shaping.

The green tire loader 100 has been designed to engage the tire without negatively affecting lower bead area rotation or bead concentricity and parallelism. The tire loader 100 has several features built in to enhance uniformity. First when grasping the green tire for transport to the press, the loader 100 tire chucks grip only the crown of the outside of the tread area. Prior art loaders grasp the inside of the top bead that would cause a negative rotation of the material around the top bead. Typical prior art loader fingers do not address concentricity of either the top or bottom bead, so as a result parallelism of the two beads is also at risk. The loader 100 maintains the centering of the bottom bead by using multiple independently lockable cylinders to grasp the tread crown without distorting the upper and lower bead center to tread relationship. Finally the loader 100 contains the top bead ring support that maintains rotation, concentricity, and parallelism, during curing bladder shaping, and the transfer of the green tire to the curing press.

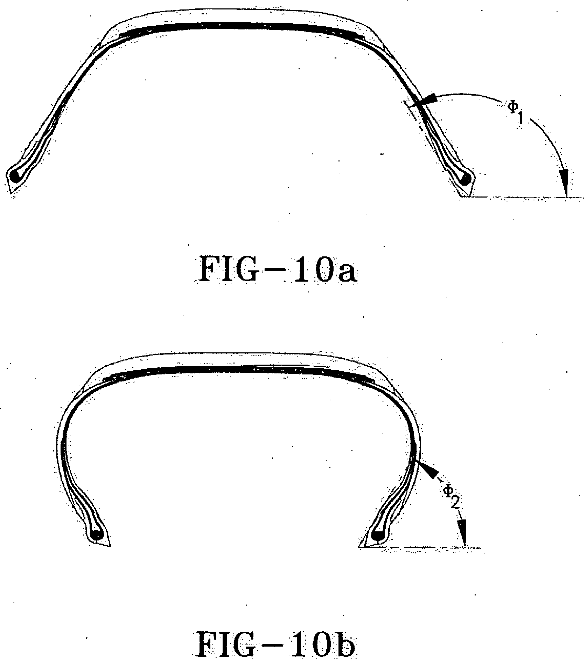

Fig. 10a illustrates a typical green tire prior to being shaped. The bead areas of the green tire have a reverse curvature as compared to the green tire of Fig. 10b. In Fig. 10b, the beads are located axially inward of the tread shoulders, as compared to Fig. 10a in which the beads are located axially outward of the tread shoulders. The lower sidewall of Fig. 10a has angle of about 120 degrees with the axis of rotation, while the lower sidewall of Fig. 10b, which is more consistent to the cured tire position, has an angle of about 60 degrees.

## Claims

1. A method for preforming a green tire to a predetermined position prior to insertion into a tire mold, the green tire having opposing first and second bead areas (14a, 14b), the method comprising the steps:
holding a first and second bead of the green tire in a concentric and parallel position;
moving one of the first and second beads towards the other;
rotating the green tire a predetermined angle and then rotating the first and second bead areas (14a, 14b) into a predetermined position; and then
holding the first and second bead areas (14a, 14b) in the predetermined position for a set period of time;
wherein the method further comprises the steps of:
indexing the green tire and repeating the green tire rotation several times.

2. The method of claim 1 further comprising providing first and second rotatable bead clamps (300, 400); rotating the first and second rotatable bead clamps (300, 400) into engagement with the first and second bead areas (14a, 14b); and then clamping the first and second bead areas (14a, 14b) against first and second bead support rings (230, 102), respectively.

3. The method of claim 2 further comprising the steps of moving one of the first and second bead support rings (230, 102) towards the other until the tire is in a desired predetermined shape; and then clamping the first and second bead areas (14a, 14b) against the first and second bead support rings (230, 102), respectively.

4. A green tire preformer apparatus for rotating the bead areas (14a, 14b) of the tire into the cured position of the tire and into alignment with each other, the green tire preformer apparatus (200) comprising: a first support having a first bead support ring (230) to support a first tire bead area (14a) of a green tire, the green tire having opposing first and second tire bead areas (14a, 14b); and a second support having a second bead support ring (102) positionable for engagement with the second tire bead area (14b); and first and second rotatable bead clamps (300, 400), wherein the first and second rotatable bead clamps (300, 400) are positioned to clamp the first and second bead areas (14a, 14b) into engagement with the first and second bead support rings (230, 102), respectively, and wherein first support and the second support is rotatable.

5. The green tire preformer apparatus of claim 4 wherein the first and second supports are parallel to each other and spaced from one another by a defined distance.

6. The green tire preformer apparatus of claim 4 or 5 wherein the first support, the second support or the first support and the second support is translatable.

7. The green tire preformer apparatus of at least one of the claims 4 or 6 wherein:
(i) the first and second rotatable bead clamps (300, 400) comprises at least eight equally spaced rotatable bead clamps; and/or
(ii) the first and second rotatable bead clamps are L shaped; and/or
(iii) the first and second rotatable bead clamps have one or more,
preferably articulable fingers.

8. The green tire preformer apparatus of at least one of the claims 5 or 7 wherein the first and second supports are spaced from one another along a column support and/or wherein the green tire preformer further comprises a centering mechanism.

9. The green tire preformer apparatus of at least one of the claims 5 or 8 wherein the tire bead support rings (230, 102) have a flat vertical component forming a lip (234) or a lip (234) with no taper, and/or wherein the tire bead support rings (230, 102) have no taper.

10. The green tire preformer apparatus of at least one of the claims 5 or 9 wherein the first and second bead support rings (230, 102) are parallel and concentric to each other and are spaced apart a defined distance (D) defined by the distance between the mold bead rings when the mold is in the closed position during curing cycle of the press.

11. A green tire preformer and tire loader system, the system comprising a green tire preformer apparatus in accordance with at least one of the claims 4 to 10 and a tire loader (100).

12. The system of claim 11 wherein the second support is mounted on the tire loader (100) and/or wherein the tire loader (100) has a plurality of paddles (110) positioned for grasping the outer portion of the green tire or a plurality of tire engaging chucks arranged in an annular manner to grip the green tire.

13. The system of claim 12 wherein the tire loader (100) comprises a support frame, wherein the plurality of tire engaging chucks or paddles (110) are mounted to the support frame, wherein each tire engaging chuck or paddle (110) is radially movable, and wherein the tire loader (100) includes a bead support ring.

## Patentansprüche

1. Verfahren zum Vorformen eines Reifenrohlings in eine vorgegebene Position vor dem Einbringen in ein Reifenformwerkzeug, wobei der Reifenrohling einen ersten und einen zweiten Wulstbereich (14a, 14b), die einander gegenüberliegen, aufweist, wobei das Verfahren die Schritte umfasst des:
Haltens eines ersten und eines zweiten Wulsts des Reifenrohlings in einer konzentrischen und parallelen Position;
Bewegens von einem des ersten und des zweiten Wulsts zu dem anderen;
Rotierens des Reifenrohlings über einen vorgegebenen Winkel und dann Rotierens des ersten und des zweiten Wulstbereichs (14a, 14b) in eine vorgegebene Position; und dann
Haltens des ersten und des zweiten Wulstbereichs (14a, 14b) in der vorgegebenen Position für einen festgelegten Zeitraum;
wobei das Verfahren weiter die Schritte umfasst des:
Weitertaktens des Reifenrohlings und mehrere Male Wiederholens der Reifenrohlingsrotation.

2. Verfahren nach Anspruch 1, weiter umfassend das Vorsehen einer ersten und einer zweiten rotierbaren Wulstklemme (300, 400); Rotieren der ersten und der zweiten rotierbaren Wulstklemme (300, 400) in Eingriff mit dem ersten und dem zweiten Wulstbereich (14a, 14b); und dann Klemmen des ersten und des zweiten Wulstbereichs (14a, 14b) gegen einen ersten beziehungsweise zweiten Wulststützring (230, 102).

3. Verfahren nach Anspruch 2, weiter die Schritte umfassend des Bewegens von einem des ersten und des zweiten Wulststützrings (230, 102) auf den anderen zu, bis der Reifen in einer gewünschten vorgegebenen Form ist; und dann Klemmens des ersten und des zweiten Wulstbereichs (14a, 14b) gegen den ersten beziehungsweise den zweiten Wulststützring (230, 102).

4. Reifenrohlings-Vorformvorrichtung zum Rotieren der Wulstbereiche (14a, 14b) des Reifens in die vulkanisierte Position des Reifens und in gegenseitige Ausrichtung, wobei die Reifenrohlings-Vorformvorrichtung (200) umfasst: eine erste Stütze mit einem ersten Wulststützring (230) zum Unterstützen eines ersten Reifenwulstbereichs (14a) eines Reifenrohlings, wobei der Reifenrohling einen ersten und einen zweiten Reifenwulstbereich (14a, 14b), die einander gegenüberliegen, aufweist; und eine zweite Stütze mit eine zweiten Wulststützring (102), der zum Eingriff mit dem zweiten Reifenwulstbereich (14b) positionierbar ist; und eine erste und eine zweite rotierbare Wulstklemme (300, 400), wobei die erste und die zweite rotierbare Wulstklemme (300, 400) dazu positioniert sind, den ersten und den zweiten Wulstbereich (14a, 14b) in Eingriff mit dem ersten beziehungsweise dem zweiten Wulststützring (230, 102) zu klemmen, und wobei die erste Stütze und die zweite Stütze rotierbar ist.

5. Reifenrohlings-Vorformvorrichtung nach Anspruch 4, wobei die erste und die zweite Stütze parallel zueinander sind und um einen definierten Abstand voneinander beabstandet sind.

6. Reifenrohlings-Vorformvorrichtung nach Anspruch 4 oder 5, wobei die erste Stütze, die zweite Stütze oder die erste Stütze und die zweite Stütze translatierbar ist.

7. Reifenrohlings-Vorformvorrichtung nach mindestens einem der Ansprüche 4 oder 6, wobei:
(i) die erste und die zweite rotierbare Wulstklemme (300, 400) mindestens acht gleich beabstandete rotierbare Wulstklemmen umfasst; und/oder
(ii) die erste und die zweite rotierbare Wulstklemme L-förmig sind; und/oder
(iii) die erste und die zweite rotierbare Wulstklemme einen oder mehrere, bevorzugt gelenkig bewegbare Finger aufweisen.

8. Reifenrohlings-Vorformvorrichtung nach mindestens einem der Ansprüche 5 oder 7, wobei die erste und die zweite Stütze entlang einer Säulenstütze voneinander beabstandet sind, und/oder wobei die Reifenrohlings-Vorformvorrichtung weiter einen Zentriermechanismus umfasst.

9. Reifenrohlings-Vorformvorrichtung nach mindestens einem der Ansprüche 5 oder 8, wobei die Reifenwulststützringe (230, 102) eine flache vertikale Komponente aufweisen, welche eine Lippe (234) oder eine Lippe (234) ohne Verjüngung bildet, und/oder wobei die Reifenwulststützringe (230, 102) keine Verjüngung aufweisen.

10. Reifenrohlings-Vorformvorrichtung nach mindestens einem der Ansprüche 5 oder 9, wobei der erste und der zweite Wulststützring (230, 102) parallel und konzentrisch zueinander sind und in einem definierten Abstand (D) voneinander beabstandet sind, der durch den Abstand zwischen den Formwerkzeug-Wulstringen definiert ist, wenn das Formwerkzeug sich während des Vulkanisationszyklus der Presse in der geschlossenen Position befindet.

11. Reifenrohlings-Vorformvorrichtung und Reifenladersystem, wobei das System eine Reifenrohlings-Vorformvorrichtung gemäß mindestens einem der Ansprüche 4 bis 10 und einen Reifenlader (100) umfasst.

12. System nach Anspruch 11, wobei die zweite Stütze an dem Reifenlader (100) montiert ist und/oder wobei der Reifenlader (100) eine Vielzahl von Paddeln (110), die zum Greifen des Außenteils des Reifenrohlings positioniert sind, oder eine Vielzahl von an dem Reifen angreifenden Einspannvorrichtungen, die ringförmig angeordnet sind, um den Reifenrohling zu greifen, aufweist.

13. System nach Anspruch 12, wobei der Reifenlader (100) ein Traggerüst umfasst, wobei die Vielzahl von an dem Reifen angreifenden Einspannvorrichtungen oder Paddeln (110) an dem Traggerüst montiert sind, wobei jede(s) an dem Reifen angreifende Einspannvorrichtung oder Paddel (110) radial bewegbar ist und wobei der Reifenlader (100) einen Wulststützring beinhaltet.

## Revendications

1. Procédé pour amener un bandage pneumatique cru à une position prédéterminée par préformage avant son insertion dans un moule pour bandage pneumatique, le bandage pneumatique cru possédant des première et deuxième zones faisant office de talons (14a, 14b), le procédé comprenant les étapes dans lesquelles :
on maintient une première et une deuxième zone du bandage pneumatique cru faisant office de talons dans des positions concentriques et parallèles ;
on déplace un talon choisi parmi le premier et le deuxième talon, en direction de l'autre talon ;
on soumet le bandage pneumatique cru à une rotation en formant un angle prédéterminé et on amène ensuite la première et la deuxième zone faisant office de talons (14a, 14b) par rotation dans une position prédéterminée ; et ensuite
on maintient la première et la deuxième zone faisant office de talons (14a, 14b) dans la position prédéterminée pendant un laps de temps déterminé ;
dans lequel le procédé comprend en outre l'étape consistant à :
faire avancer le bandage pneumatique cru pas à pas et répéter la rotation du bandage pneumatique cru à plusieurs reprises.

2. Procédé selon la revendication 1, comprenant en outre le fait de procurer une première et une deuxième pince de talon rotatives (300, 400) ; le fait de mettre par rotation la première et la deuxième pince de talon rotatives (300, 400) en contact avec la première et la deuxième zone faisant office de talons (14a, 14b) ; et ensuite le fait de serrer la première et la deuxième zone faisant office de talons (14a, 14b) contre un premier et un deuxième anneau de support de talon (230, 102), respectivement.

3. Procédé selon la revendication 2, comprenant en outre les étapes dans lesquelles on déplace un anneau de support parmi le premier et le deuxième anneau de support de talon (230, 102) en direction de l'autre panneau de support jusqu'à ce que le bandage pneumatique possède une configuration prédéterminée désirée ; et on serre ensuite la première et la deuxième zone faisant office de talons (14a, 14b) contre le premier et le deuxième anneau de support de talon (230, 102), respectivement.

4. Appareil destiné au préformage d'un bandage pneumatique cru pour amener par rotation la première et la deuxième zone faisant office de talons (14a, 14b) du bandage pneumatique dans la position vulcanisée du bandage pneumatique et en alignement réciproque, l'appareil (200) destiné au préformage d'un bandage pneumatique cru comprenant : un premier support possédant un premier anneau de support de talon (230) pour supporter une première zone (14a) d'un bandage pneumatique cru faisant office de talon, le bandage pneumatique cru possédant des première et deuxième zones opposées faisant office de talons (14a, 14b) ; et un deuxième support possédant un deuxième anneau de support de talon (102) qui peuvent venir se positionner pour une mise en contact avec la deuxième zone de bandage pneumatique faisant office de talon (14b) ; et des première et deuxième pinces de talons rotatives (300, 400), la première et la deuxième pince de talon rotative (300, 400) étant disposées pour serrer la première et la deuxième zone faisant office de talons (14a, 14b) en contact avec le premier et le deuxième anneau de support de talon (230, 102), respectivement, et dans lequel le premier support et le deuxième support sont rotatifs.

5. Appareil destiné au préformage d'un bandage pneumatique cru selon la revendication 4, dans lequel le premier support et le deuxième support sont parallèles l'un à l'autre et sont espacés l'un de l'autre sur une distance définie.

6. Appareil destiné au préformage d'un bandage pneumatique cru selon la revendication 4, dans lequel le premier support, le deuxième support ou le premier support et le deuxième support est/sont aptes à effectuer une translation.

7. Appareil destiné au préformage d'un bandage pneumatique cru selon au moins une des revendications 4 ou 6, dans lequel :
(i) la première et la deuxième pince de talon rotative (300, 400) comprennent au moins huit pinces de talons rotatives équidistantes ; et/ou
(ii) la première et la deuxième pince de talon rotative (300, 400) possèdent une configuration en forme de L ; et/ou
(iii) la première et la deuxième pince de talon rotative possèdent un ou plusieurs doigts, de préférence articulés.

8. Appareil destiné au préformage d'un bandage pneumatique cru selon au moins une des revendications 5 ou 7, dans lequel le premier et le deuxième support sont espacés l'un de l'autre le long d'un support en forme de colonne et/ou dans lequel l'appareil destiné au préformage d'un bandage pneumatique comprend un mécanisme de centrage.

9. Appareil destiné au préformage d'un bandage pneumatique cru selon au moins une des revendications 5 ou 8, dans lequel les anneaux de support des talons du bandage pneumatique (230, 102) possèdent un composant vertical plat formant une lèvre (234) ou une lèvre (234) en l'absence de conicité ; et/ou dans lequel les anneaux de support des talons du bandage pneumatique (230, 102) sont exempts de conicité.

10. Appareil destiné au préformage d'un bandage pneumatique cru selon au moins une des revendications 5 ou 9, dans lequel le premier et le deuxième anneau de support de talon (230, 102) sont parallèles et sont concentriques l'un par rapport à l'autre et sont espacés l'un de l'autre sur une distance définie (D) qui est définie par la distance qui sépare les anneaux de talon du moule lorsque le moule se trouve en position fermée au cours d'un cycle de vulcanisation de la presse.

11. Système comprenant un appareil destiné au préformage d'un bandage pneumatique et un dispositif de chargement de bandage pneumatique, le système comprenant un appareil destiné au préformage d'un bandage pneumatique conformément à au moins une des revendications 4 à 10 et un dispositif de chargement de bandage pneumatique (100).

12. Système selon la revendication 11, dans lequel le deuxième support est monté sur le dispositif de chargement de bandage pneumatique (100) et/ou dans lequel le dispositif de chargement de bandage pneumatique (100) possède plusieurs palettes (110) qui sont disposées pour saisir la portion externe du bandage pneumatique cru ou plusieurs dispositifs de préhension du bandage pneumatique entrant en contact avec ce dernier disposés dans une configuration annulaire pour saisir le bandage pneumatique cru.

13. Système selon la revendication 11, dans lequel le dispositif de chargement de bandage pneumatique (100) comprend un cadre de support, lesdites plusieurs palettes ou lesdits plusieurs dispositifs de préhension (110) étant montés sur le cadre de support, chaque palette ou chaque dispositif de préhension (110) étant mobile en direction radiale, et dans lequel le dispositif de chargement de bandage pneumatique (100) englobe un anneau de support de talon.
